# EUROPÄISCHE PATENTSCHRIFT

(11) **EP 1 872 093 B1**
(45) Veröffentlichungstag und Bekanntmachung des Hinweises auf die Patenterteilung: **19.12.2012**
(21) Anmeldenummer: 06724872.4
(22) Anmeldetag: 23.02.2006
(51) Int. Cl.: F02D 41/18, G01F 1/692, G01F 1/698, G01F 1/684, G01F 15/12

(54) **BEHEIZTER HEIßFILMLUFTMASSENMESSER**
HEATED HOT-FILM AIR-FLOW SENSOR
DEBITMETRE D'AIR MASSIQUE A FILM CHAUD

(30) Priorität: 11.04.2005 DE 102005016449
(43) Veröffentlichungstag der Anmeldung: 02.01.2008
(73) Patentinhaber: Robert Bosch GmbH, 70442 Stuttgart (DE)
(72) Erfinder: RENNINGER, Erhard, 71706 Markgroeningen (DE); HUEFTLE, Gerhard, 71546 Aspach (DE); BRUECKNER, Joerg, 71069 Sindelfingen (DE); OPITZ, Bernhard, 71229 Leonberg (DE); KUENZL, Bernd, 71701 Schwieberdingen (DE); KONZELMANN, Uwe, 71679 Asperg (DE); WAGNER, Ulrich, 70176 Stuttgart (DE); MARBERG, Henning, 71263 Weil der Stadt (DE); GMELIN, Christoph, 70597 Stuttgart (DE); ILLIAN, Matthias, 70839 Gerlingen (DE)
(86) Internationale Anmeldenummer: PCT/EP2006/060218
(87) Internationale Veröffentlichungsnummer: WO 2006/108734

(56) Entgegenhaltungen:
- WO-A-2004/106863
- DE-A1- 10 111 840
- DE-A1- 10 232 072
- US-A- 5 255 642
- US-A1- 2004 168 513

## Beschreibung

Die Erfindung betrifft einen Heißfilmluftmassenmesser, insbesondere zur Messung von Luftmassenströmen im Ansaugtrakt einer Verbrennungskraftmaschine. Insbesondere betrifft die Erfindung einen Heißfilmluftmassenmesser mit mindestens einem zusätzlichen Heizelement zur Aufheizung eines Sensorchips. Weiterhin betrifft die Erfindung ein Verfahren zur Luftmassenmessung im Ansaugtrakt einer Verbrennungskraftmaschine mittels eines erfindungsgemäßen Heißfilmluftmassenmessers, sowie ein Verfahren zur Herstellung eines Heißfilmluftmassenmessers.

### Stand der Technik

Bei vielen Prozessen, beispielsweise auf dem Gebiet der Verfahrenstechnik, der Chemie oder dem Maschinenbau, muss definiert eine Gasmasse, insbesondere eine Luftmasse, zugeführt werden. Hierzu zählen insbesondere Verbrennungsprozesse, welche unter geregelten Bedingungen ablaufen. Ein wichtiges Beispiel ist dabei die Verbrennung von Kraftstoff in Verbrennungskraftmaschinen von Kraftfahrzeugen, insbesondere mit anschließender katalytischer Abgasreinigung. Zur Messung des Luftmassendurchsatzes werden dabei verschiedene Typen von Sensoren eingesetzt.

Ein aus dem Stand der Technik bekannter Sensortyp ist der so genannte Heißfilmluftmassenmesser (HFM), welcher beispielsweise in DE 196 01 791 A1 in einer Ausführungsform beschrieben ist. Bei derartigen Heißfilmluftmassenmessern wird üblicherweise eine dünne Sensormembran auf einen Sensorchip, beispielsweise einen Silizium-Sensorchip, aufgebracht. Auf der Sensormembran ist typischerweise mindestens ein Heizwiderstand angeordnet, welcher von zwei oder mehr Temperaturmesswiderständen umgeben ist. In einem Luftstrom, welcher über die Membran geführt wird, ändert sich die Temperaturverteilung, was wiederum von den Temperaturmesswiderständen erfasst werden kann. Somit kann, z. B. aus der Widerstandsdifferenz der Temperaturmesswiderstände, ein Luftmassenstrom bestimmt werden. Verschiedene andere Variationen dieses Sensortyps sind aus dem Stand der Technik bekannt.

Eine beispielsweise aus DE 101 11 840 C2 bekannte Problematik bei diesem Typ von Sensoren besteht darin, dass häufig Kontaminationen des Sensorchips auftreten können, beispielsweise durch Öl. Der Sensorchip wird üblicherweise entweder direkt im Ansaugtrakt der Verbrennungskraftmaschine oder in einem Bypass zum Ansaugtrakt der Verbrennungskraftmaschine eingesetzt. Dabei kann sich bereits im Betrieb der Verbrennungskraftmaschine Öl auf dem Sensorchip und dabei insbesondere auf der Sensormembran niederschlagen. Dieser Ölniederschlag kann zu einer unerwünschten Messsignalbeeinflussung des Sensorchips führen, insbesondere da ein Ölfilm auf der Oberfläche des Sensorchips auf die Wärmeleitfähigkeit der Oberfläche einwirkt, was zu Verfälschungen der Messsignale führt.

Diese Ölkontamination tritt insbesondere beim oder kurz nach dem Abschalten der Verbrennungskraftmaschine, beispielsweise eines Dieselmotors, auf. Nach Abstellen der Verbrennungskraftmaschine baut sich ein in einem Kurbelgehäuse vorhandener Überdruck typischerweise über eine Kurbelgehäuseentlüftung in den Ansaugtrakt der Verbrennungskraftmaschine ab. Dabei wird häufig Öldampf bzw. Ölnebel mitgeführt, welcher sich im Ansaugtrakt und damit auch am dort angeordneten (oder in einem entsprechenden Bypass angeordneten) Luftmassenmesser als Ölfilm niederschlagen kann.

Die DE 101 11 840 C2 schlägt daher einen Sensorchip vor, welcher ein Rahmenelement, beispielsweise aus Silizium, mit einer darauf aufgebrachten Membran aufweist. Auf der Membran sind verschiedene Metallbahnen angeordnet, welche als elektrische Heizer und/oder Messwiderstände fungieren, wodurch der Bereich der Membran einen Sensorbereich bildet. Weiterhin ist auf der Oberfläche des Sensorchips zusätzlich mindestens ein Zusatzheizer angeordnet, welcher elektrisch so erhitzt werden kann, dass im Bereich des Zusatzheizers im strömenden Medium Thermogradientenwirbel gebildet werden, welche zu Niederschlägen der Verschmutzungen in dem Bereich des Zusatzheizers abseits des Bereichs des Sensorbereichs führen.

Diese aus dem Stand der Technik bekannte Vorrichtung weist jedoch verschiedene Nachteile auf. Ein wesentlicher Nachteil besteht darin, dass in DE 101 11 840 C2 der Zusatzheizer in unmittelbarer Nähe oder gar auf der Sensormembran angeordnet ist. Dies ist bei der offenbarten Anordnung insbesondere dadurch bedingt, dass der Silizium-Sensorchip lediglich eine kleine Fläche aufweist, so dass eine beabstandete Anordnung von Zusatzheizer und Sensormembran technisch zu realisieren ist. Diese benachbarte Anordnung von Zusatzheizer und Sensormembran kann jedoch dazu führen, insbesondere bei starken Ölbelastungen, dass Öltröpfchen zurück auf die Sensormembran fließen und somit wiederum zu einer Verschmutzung der Sensormembran und einer damit verbundenen Änderung der Wärmeleitung und somit einer Signaldrift führen. Weiterhin besteht ein Nachteil der in der DE 101 11 840 C2 dargestellten Anordnung im so genannten Marangoni-Effekt, welcher in einer Ausbildung unterschiedlicher Oberflächenspannungen bei unterschiedlichen Temperaturen besteht. Ein Ölfilm weist relativ zur Luft in kaltem Zustand eine höhere Oberflächenspannung als in heißem Zustand auf. Liegt in einer Flüssigkeit ein thermischer Gradient vor, so führt der Marangoni-Effekt üblicherweise zu einer Fluidbewegung von wärmeren Zonen hin zu kälteren Zonen. Somit kann die in der DE 101 11 840 C2 beschriebene Anordnung sogar den Nachteil beinhalten, dass Öltröpfchen auf der Oberfläche des Sensorchips vom Zusatzheizer hin auf die Sensormembran gedrängt werden und somit die Verschmutzung der Sensormembran sogar erhöhen anstatt zu verringern.

EP1653201 und US2004/0168513 offenbaren auch solche Heißfulmluft-massenmessen, die ein zusätzliches Heizelement in oder auf dem Sensorchip aufweisen.

Ein weiterer Nachteil der aus dem Stand der Technik bekannten Anordnungen ist dadurch bedingt, dass die Hauptverschmutzung durch Öl, wie oben beschrieben, beim oder kurz nach dem Abschalten der Verbrennungskraftmaschine auftritt, da dann Ölnebel durch den Ansaugtrakt und den Bypass hin zum Heißfilmluftmassenmesser diffundieren und diesen verschmutzen. Die aus dem Stand der Technik bekannten Anordnungen weisen also den Nachteil auf, dass unmittelbar nach dem Abschalten der Verbrennungskraftmaschine der Heißfilmluftmassemnesser stark mit Öl kontaminiert wird.

### Vorteile der Erfindung

Es wird daher erfindungsgemäß ein Heißfilmluftmassenmesser nach dem Anspruch 1 vorgeschlagen, welcher die Nachteile der aus dem Stand der Technik bekannten Heißfilmluftmassenmesser vermeidet. Weiterhin wird ein Verfahren zur Luftmassemnessung im Ansaugtrakt einer Verbrennungskraftmaschine nach dem Anspruch 7 vorgeschlagen, welches insbesondere mittels eines Heißfilmluftmassenmessers gemäß der Erfindung durchgeführt werden kann. Schließlich wird ein Verfahren nach dem Anspruch 11 zur Herstellung eines Heißfilmluftmassenmessers gemäß der Erfindung, vorgeschlagen.

Ein Kerngedanke der Erfindung besteht darin, einen Sensorchip und ein zusätzliches Heizelement einzusetzen. Der Sensorchip, welcher einen Sensorrahmen und eine Sensormembran mit mindestens einem Heizelement und mindestens zwei Temperatursensoren ausweist, kann beispielsweise gemäß dem Stand der Technik, beispielsweise wie in DE 196 01 791 A1 beschrieben, ausgestaltet sein. Der Sensorchip ist in einen Chipträger zur Halterung und Kontaktierung des Sensorchips eingebracht. Insbesondere kann dieser Chipträger eine Sensornase aufweisen, beispielsweise eine Sensornase, welche ein Kunststoffbauteil aufweist und welche direkt in einen Ansaugtrakt einer Verbrennungskraftmaschine hineinragt oder in einen Bypass zu einem Ansaugtrakt einer Verbrennungskraftmaschine. Beispielsweise kann diese Sensornase als Kunststoffbauteil an ein Sensorgehäuse angeformt sein, beispielsweise ein Sensorgehäuse aus Stahlblech. Das mindestens eine zusätzliche Heizelement ist dabei derart in den Chipträger, beispielsweise in die Sensomase, eingebracht, dass mittels des mindestens einen zusätzlichen Heizelements der Sensorchip aufheizbar ist. Insbesondere soll dieses Aufheizen so erfolgen können, dass der Sensorchip durch das mindestens eine zusätzliche Heizelement vollständig und gleichförmig aufgeheizt wird.

In einer Ausgestaltung der Erfindung weist der Chipträger eine Vertiefung auf, wobei der Sensorchip in diese Vertiefung eingebracht ist, dergestalt, dass der Sensorchip mit dem Chipträger im Wesentlichen bündig abschließt. Auf diese Weise lassen sich Abstufungen an der Oberfläche vermeiden, welche wiederum zu Verwirbelungen und zu zusätzlichen Ablagerungen von Verschmutzungen führen können. Das mindestens eine zusätzliche Heizelement kann als separates Element in den Chipträger eingelassen werden, beispielsweise in die der Chipseite entgegengesetzten Rückseite des Chipträgers. Alternativ oder zusätzlich kann das mindestens eine zusätzliche Heizelement auch unmittelbar Bestandteil des Chipträgers sein. Beispielsweise kann auf den Chipträger unmittelbar mindestens eine Widerstandsbahn aufgebracht werden, beispielsweise innerhalb der oben genannten Vertiefung zur Aufnahme des Sensorchips. Weist der Chipträger, wie oben beschrieben, ein Kunststoffbauteil auf, so lässt sich dieser Heizwiderstand mit der mindestens einen Widerstandsbahn beispielsweise als MID-Bauteil (Molded Interconnect Device, spritzgegossener Schaltungsträger) realisieren. Dabei können verschiedene aus dem Bereich der MID-Technologie bekannte Verfahren eingesetzt werden, beispielsweise MehrkomponentenSpritzguss, bei welchem der Chipträger aus mindestens einer metallisierbaren und mindestens einer nicht-metallisierbaren Kunststoffkomponente zusammengesetzt wird. Auch Heißprägeverfahren, bei welchen die Widerstandsbahn mittels eines Heißprägestempels und einer metallischen Heißprägefolie auf eine Kunststoffoberfläche aufgepresst wird, können eingesetzt werden. Weiterhin lassen sich auch Laserstrukturierungsverfahren einsetzen, beispielsweise so genannte Laserdirektstrukturierungsverfahren (LDS). Dabei werden Oberflächenbereiche des Kunststoffs selektiv mittels eines Lasers aktiviert, so dass in einem nachfolgenden Metallisierungsschritt beispielsweise lediglich diese aktivierten Oberflächenbereiche metallisiert werden. Die genannten Verfahren lassen sich teilweise auch kombinieren. Weitere Verfahrensmerkmale sowie weitere MID-Verfahren sind dem Fachmann bekannt. Beispielsweise kann zunächst der Sensorträger an ein Sensorgehäuse angeformt werden, beispielsweise mittels eines entsprechenden Spritzgussverfahrens. Anschließend wird nach dem oben beschriebenen Verfahren der mindestens eine zusätzliche Heizwiderstand auf den Sensorträger aufmetallisiert, beispielsweise mittels eines der beschriebenen MID-Verfahren. Anschließend wird der Sensorchip, wobei es sich um einen Sensorchip der beschriebenen Art handeln kann, auf den mindestens einen zusätzlichen Heizwiderstand aufgebracht. Schließlich wird mindestens ein Schaltungsträger zur Ansteuerung des Heißfilmluftmassenmessers und des zusätzlichen Heizelements auf das Sensorgehäuse aufgebracht, wobei mindestens ein elektrischer Kontakt des mindestens einen Schaltungsträgers mit mindestens einem elektrischen Kontakt des mindestens einen zusätzlichen Heizwiderstands verbunden wird.

Ein wesentlicher Vorteil der erfindungsgemäßen Ausgestaltung des Heißfilmluftmassemnessers besteht darin, dass der gesamte Sensorchip erwärmt werden kann. Dadurch tritt der Übergang zwischen erwärmtem Bereich und kaltem Bereich vorteilhafterweise erst am Übergang zwischen dem Sensorchip und dem Chipträger auf. Aufgrund des genannten Marangoni-Effekts werden somit Öltröpfchen vollständig vom Sensorchip verdrängt und auf den umgebenden Chipträger abgeleitet. Dabei können auch Heizelemente eingesetzt werden, welche speziell angepasste Temperaturprofile aufweisen, um einen optimalen Verdrängungsprozess und einen gleichmäßigen Tropfentransport bis an den Rand des Sensorchips zu gewährleisten.

Weiterhin werden durch die Erwärmung des gesamten Sensorchips die genannten Thermogradientenwirbel am Übergang zwischen einer erwärmten Oberfläche und einer kalten Oberfläche im umgebenden Strömungsmedium von der Oberfläche des Sensorchips verdrängt hin zum Rand des Sensorchips. Da Ölverschmutzungen, insbesondere durch in einen Bypass diffundierende Öldämpfe bzw. Ölnebel, bevorzugt im Bereich dieser Thermogradientenwirbel auftreten, ist durch die erfindungsgemäße Ausgestaltung des Heißfillluftmassenmessers die Zone dieser Thermogradientenwirbel und somit die Zone einer maximalen Verschmutzung weg von der Chipoberfläche hin zum Chipträger gedrängt. Auch dadurch wird eine Kontamination der Oberfläche des Sensorchips minimiert. Die Sensormembran wird kaum noch von Öltröpfchen getroffen und bleibt daher sauber, wodurch eine Sensordrift im Betrieb weitgehend vermieden wird.

Der erfindungsgemäße Heißfilmluftmassenmesser kann dahingehend betrieben werden, dass das mindestens eine zusätzliche Heizelement während des Betriebes des Heißfilmluftmassenmessers den Sensorchip im Wesentlichen kontinuierlich beheizt. Auch eine Anpassung der Beheizung an verschiedene Betriebszustände der Verbrennungskraftmaschine ist denkbar, wobei beispielsweise in Betriebszuständen, in welchen eine verstärkte Ölkontamination zu erwarten ist, eine verstärkte Beheizung des Sensorchips erfolgt. Alternativ oder zusätzlich kann die zusätzliche Beheizung durch das mindestens eine zusätzliche Heizelement auch nach dem Abschalten der Verbrennungskraftmaschine für eine vorgegebene Nachheizperiode weiterbetrieben werden. Insbesondere kann die Nachheizperiode so bemessen sein, dass die oben beschriebene Diffusion von Öldampf bzw. Ölnebel, welche bei der Entlüftung des Kurbelgehäuses entsteht, abgeschlossen ist. Vorzugweise wird eine Nachheizperiode einer Länge von 10 Sekunden bis 5 Minuten verwendet, besonders bevorzugt von ca. 1 Minute. Insbesondere kann die Nachheizperiode vorzugsweise so ausgestaltet sein, dass das mindestens eine Heizelement auf der Sensormembran des Sensorchips während dieser Zeit abgeschaltet ist, wohingegen das mindestens eine zusätzliche Heizelement im Betrieb ist. Vorteilhafterweise wird das mindestens eine zusätzliche Heizelement während dem Betrieb der Verbrennungskraftmaschine nicht beheizt, wird erst mit dem Abschalten oder erst nach dem Abschalten der Verbrennungskraftmaschine aufgeheizt und dann für die genannte Nachheizperiode aufgeheizt belassen. Auch eine zeitliche Abstufung oder ein Temperaturverlauf des mindestens einen zusätzlichen Heizelements während der Nachheizperiode ist denkbar.

### Zeichnung

Anhand der Zeichnung wird die Erfindung nachstehend näher erläutert. Es zeigt:
- Figur 1: eine Draufsicht eines Heißfilmluftmassenmessers mit einem Sensorgehäuse, einem Sensorträger mit einem Sensorchip und einem Bypasskanal;
- Figur 1A: eine Detaildarstellung eines im Ausführungsbeispiel gemäß Figur 1 verwendeten Chipträgers mit eingesetztem Sensorchip;
- Figur 2: eine schematische Darstellung des Strömungsverlaufs eines Strömungsmediums über einem konventionellen Sensorchip;
- Figur 3: einen Strömungsverlauf eines Strömungsmediums über einem erfindungsgemäßen Sensorchip;
- Figur 4: eine Schnittdarstellung eines Ausführungsbeispiels eines Sensorträgers mit einem Sensorchip und einem separaten, in den Sensorträger rückseitig eingelassenen zusätzlichen Heizelement;
- Figur 5A: eine perspektivische Teildarstellung eines Heißfilmlufimassenmessers mit als MID-Bauteil ausgeformtem Sensorträger in Ansicht von oben;
- Figur 5B: eine perspektivische Darstellung der Anordnung gemäß Figur 5A in Ansicht von unten mit zusätzlich einem Schaltungsträger;
- Figur 5C: eine perspektivische Darstellung der Anordnung gemäß Figur 5A und 5B in Ansicht von oben mit aufgebrachtem Schaltungsträger und eingebrachtem Sensorchip;
- Figur 6: ein Blockschaltbild einer elektronischen Schaltung zur Beheizung eines zusätzlichen Heizelements; und
- Figur 7: ein Schaltbild einer elektronischen Schaltung zur Nachheizung eines zusätzlichen Heizelements nach Abschalten einer Verbrennungskraftmaschine.

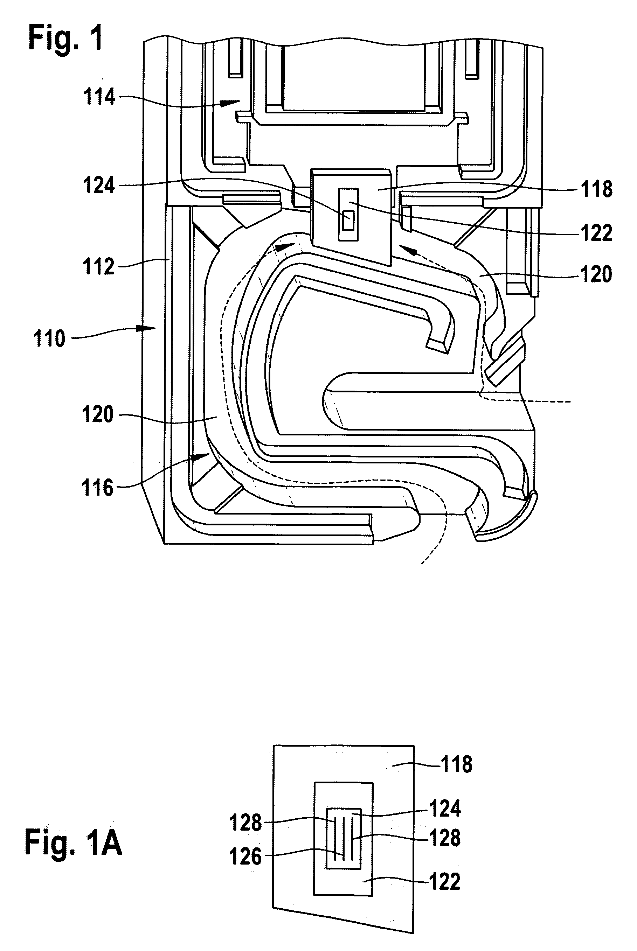

In Figur 1 ist ein Heißfilmluftmassenmesser 110 in Ansicht von oben dargestellt. Der Heißfilmluftmassenmesser 110 weist ein Gehäuse 112 auf, welches beispielsweise als Spritzgussbauteil ausgestaltet sein kann. Das Gehäuse 112 weist einen Elektronikbereich 114 und einen Kanalbereich 116 auf. Der Elektronikbereich 114 weist im Wesentlichen eine Aussparung zur Aufnahme eines Sensorgehäuses auf, welches jedoch in Figur 1 zur Vereinfachung nicht dargestellt ist. An das Sensorgehäuse angeformt ist ein als Sensornase 118 ausgeformter Chipträger 118, welcher in einen in den Kanalbereich 116 des Gehäuses 112 eingelassenen Bypasskanal 120 hineinragt. Der gesamte Heißfilmluftmassenmesser 110 wird so in einen Ansaugtrakt einer Verbrennungskraftmaschine eingebaut, dass Luft aus dem Ansaugtrakt durch den Bypasskanal 120 zum Chipträger 118 strömen kann.

In den Chipträger 118 ist ein Sensorchip 122 eingelassen, welcher einen aktiven Bereich in Form einer Membran 124 aufweist. Der Sensorchip 122 ist beispielsweise gemäß der oben beschriebenen, aus dem Stand der Technik bekannten Vorrichtung ausgestaltet und weist mindestens ein Heizelement 126 und mindestens zwei Temperatursensoren 128 auf der Membran 124 auf (siehe Detaildarstellung des Chipträgers 118 in Figur 1A). Die Funktionsweise derartiger Heißfilmluftmassenmesser 110 gemäß der Darstellung in Figur 1 und Figur 1A ist aus dem Stand der Technik bekannt.

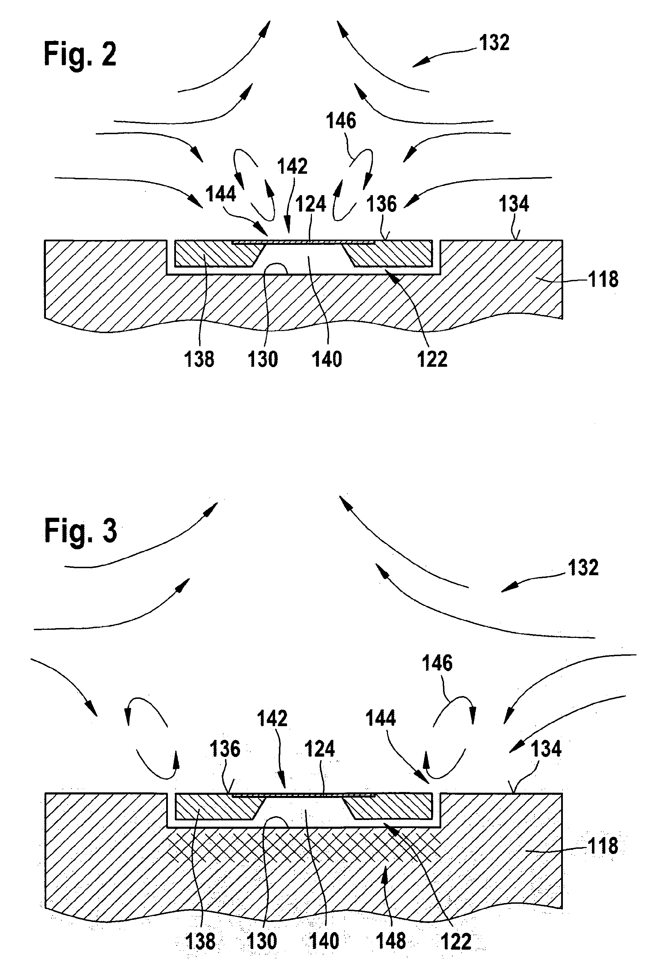

Wie oben bereits beschrieben, weisen herkömmliche Heißfilmlunmassenmesser 110 gemäß dem in Figur 1 dargestellten Aufbau jedoch Kontaminationsprobleme auf. Diese Kontaminationsprobleme hängen unter anderem mit der Ausbildung von Thermogradientenwirbeln zusammen. Dies soll anhand von Figur 2 und Figur 3 verdeutlicht werden. Beide Figuren zeigen eine Schnittdarstellung durch einen Chipträger 118. Der Chipträger 118 weist eine Vertiefung 130 auf, welche in eine einem Strömungsmedium 132 zugewandte Oberfläche 134 des Chipträgers 118 eingelassen ist. Der Sensorchip 122 ist dabei derart in die Vertiefung 130 eingelassen, dass eine Sensoroberfläche 136 im Wesentlichen bündig mit der Oberfläche 134 des Chipträgers 118 abschließt. Der Sensorchip 122 weist einen Sensorrahmen 138 auf, welcher beispielsweise als Silizium-Bauteil ausgestaltet sein kann. Auf diesen Sensorrahmen 138 ist die Sensormembran 124 aufgespannt. Der Sensorrahmen 138 weist eine Öffnung 140 auf, in welchem die Sensormembran 124 im Wesentlichen als freitragender Film ausgestaltet ist. In diesem Bereich der Öffnung 140 ist auf der Sensoroberfläche 136 der aktive Bereich 142 des Sensorchips 122 ausgebildet, wobei innerhalb dieses aktiven Bereichs 142 das Heizelement 126 und die Temperatursensoren 128 (welche in den Figuren 2 und 3 nicht dargestellt sind) auf der Sensoroberfläche 136 angeordnet sind.

Der Heißfilmluftmassenmesser 110 wird üblicherweise dahingehend betrieben, dass das Heizelement 126 auf ca. 200°C aufgeheizt wird. Somit herrschen also im Betrieb im aktiven Bereich 142 des Sensorchips 122 Temperaturen dieser Größenordnung. An der Grenze zwischen dem aktiven Bereich 142 und dem Sensorrahmen 138, welcher üblicherweise eine Temperatur von ca. 20°C im Betrieb aufweist, bildet sich somit ein starker Temperaturgradient. Dementsprechend bilden sich im Strömungsmedium 132 in diesem Übergangsbereich Thermogradientenwirbel 146 aus. Im Bereich dieser Thermogradientenwirbel 146 bildet sich somit auf der Sensoroberfläche 136 ein Ölablagerungsbereich 144 aus, in welchem sich Öltröpfchen oder Ölnebel aus dem Strömungsmedium 132 bevorzugt niederschlagen.

In dem in Figur 2 dargestellten, dem Stand der Technik entsprechenden Ausführungsbeispiel wird der Sensorchip 122 nicht zusätzlich beheizt. Im Gegensatz dazu ist in Figur 3 ein erfindungsgemäßes Ausführungsbeispiel dargestellt, bei welchem der Sensorchip 122 über eine in Figur 3 symbolisch angedeutete Heizzone 148 im Chipträger 118 beheizt wird. Die Ausgestaltung dieser Heizzone 148 durch Integration oder Einlagerung zusätzlicher Heizelemente ist unten näher beschrieben. Erfindungsgemäß ist in dieser Ausgestaltung gemäß Figur 3 die Heizzone 148 so ausgestaltet, dass sich diese im Wesentlichen bis zu den Rändern der Vertiefung 130 im Chipträger 118 erstreckt, so dass mittels dieser Heizzone 148 der Sensorchip 122 im Wesentlichen homogen aufgeheizt werden kann. Hierbei hat sich in Versuchen eine Aufheizung auf eine Temperatur von 40 bis 180°C, vorzugsweise 60 bis 100°C und besonders bevorzugt von ca. 80°C des Sensorchips 122 bewährt. Wie in Figur 3 dargestellt, bewirkt diese Aufheizung des Sensorchips 122 eine Erwärmung des aktiven Bereichs 142 des Sensorchips 122 auf Temperaturen von ca. 260°C bis 280°C, wohingegen der Sensorrahmen 138 eine Temperatur von ca. 80°C aufweist. Dadurch werden die Thermogradientenwirbel 146 von der aktiven Fläche 142 weg hin zum Rand des Sensorchips 122 gedrängt. Wird, wie dies in einer bevorzugten Ausgestaltung nach Abschalten des Verbrennungsmotors erfolgt, hingegen das Heizelement 126 vollständig abgeschaltet, so wird der Sensorchip mittels der Heizzone 148 gleichmäßig auf ca. 80°C aufgeheizt. Somit verschiebt sich auch der Ölablagerungsbereich 144 weg von der aktiven Fläche 142 hin zum Rand des Sensorchips 122 und zum Übergangsbereich zwischen Sensorchip 122 und Chipträger 118. Wie oben beschrieben, kann diese Erwärmung des Sensorchips 122 durch die Heizzone 148 während des Betriebes der Verbrennungskraftmaschine erfolgen und/oder nach Abschalten der Verbrennungskraftmaschine, welche durch den Bypasskanal 120 zum Sensorchip 122 diffundieren, sich als Öltröpfchen auf der aktiven Fläche 142 des Sensorchips 122 niederschlagen.

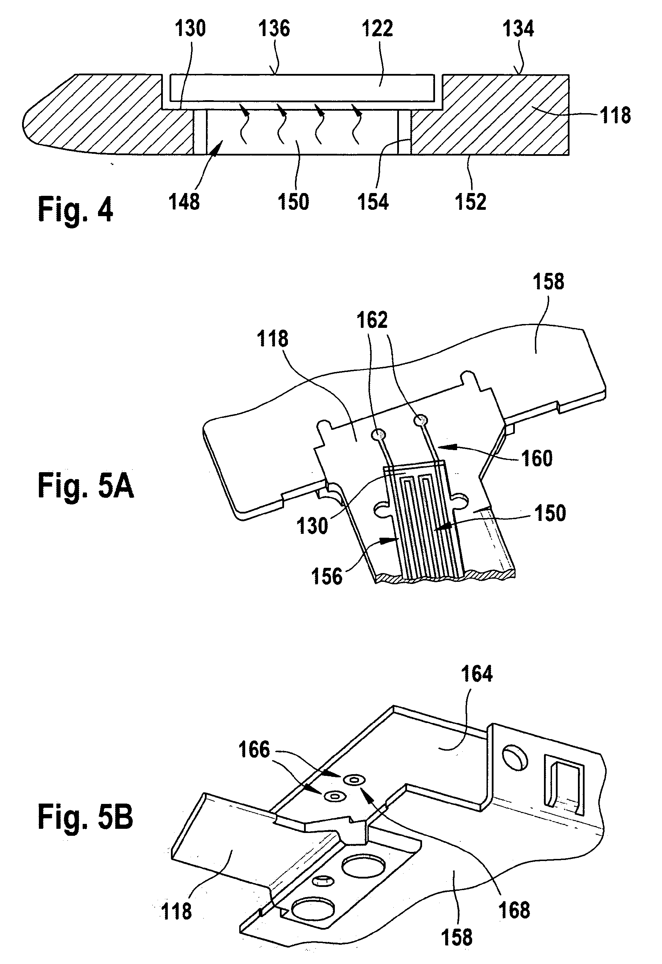

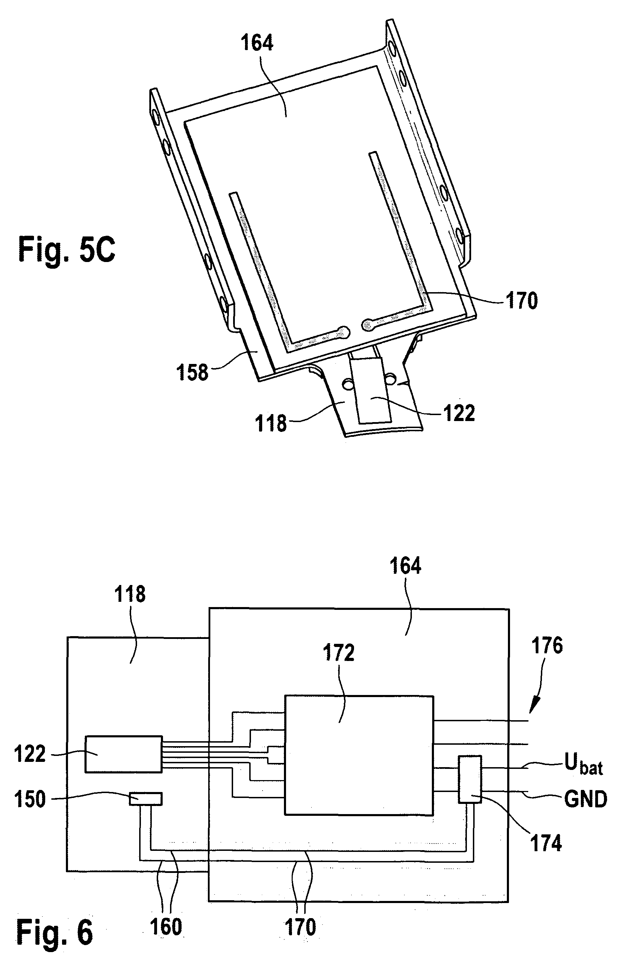

In den Figuren 4, 5A, 5B und 5C sind unterschiedliche Ausführungsbeispiele dargestellt, die den erfindungsgemäßen Gedanken einer Aufheizung des Sensorchips 122 durch ein zusätzliches Heizelement realisieren. In Figur 4 ist dabei wiederum ein Schnitt durch einen Chipträger 118 eines Heißfilmluftmassenmessers 110 dargestellt, analog zur Darstellung in den Figuren 2 und 3. In dem Ausführungsbeispiel gemäß Figur 4 ist in den Chipträger 118 ein separates, zusätzliches Heizelement 150 eingelassen. Dieses zusätzliche Heizelement 150 ist in dem Ausführungsbeispiel gemäß Figur 4 als separates Bauteil ausgestaltet, welches in eine auf der Rückseite 152 eingelassene Aussparung 154 eingebettet ist. In diesem Ausführungsbeispiel gemäß Figur 4 ist das zusätzliche Heizelement 150 von seinen lateralen Abmessungen her so bemessen, dass sich das zusätzliche Heizelement 150 nicht vollständig bis zum Rand der Vertiefung 130 erstreckt. Die Dimensionierung des zusätzlichen Heizelements 150 ist jedoch so bemessen, dass mittels des zusätzlichen Heizelements 150 im Wesentlichen der gesamte Sensorchip 122 homogen beheizbar ist.

Das zusätzliche Heizelement 150 kann z. B. als kommerziell erhältlicher Heizwiderstand ausgestaltet sein. Dieser Heizwiderstand kann bestromt werden und gibt somit Wärme an den Sensorchip 122 ab. Die thermische Anbindung an den Sensorchip kann entweder durch Strahlung (wobei kein physikalischer Kontakt zum Sensorchip 122 erforderlich ist) oder auch durch direkte thermische Verbindung (Wärmeleitung), z. B. unterstützt durch Wärmeleitpaste zwischen dem zusätzlichen Heizelement 150 und dem Sensorchip 122, erfolgen.

In einem zur Ausgestaltung gemäß Figur 4 alternativen, bevorzugten Ausführungsbeispiel gemäß den Figuren 5A bis 5C ist das zusätzliche Heizelement 150 nicht, wie im Ausführungsbeispiel gemäß Figur 4, als separates Bauteil ausgeführt, sondern integraler Bestandteil des Chipträgers 118. Dabei ist das zusätzliche Heizelement 150 in Form von Heizwiderständen 156 ausgebildet, welche als metallische Widerstandsbahnen auf den Chipträger 118 aufgebracht werden. Dabei wird, wie oben beschrieben, vorzugsweise ein MID-Verfahren eingesetzt, beispielsweise eine Laserstrukturierung. Beispielsweise können die Heizwiderstände 156 als Kupfer-Bahnen, Nickel-Bahnen oder Gold-Bahnen auf dem Chipträger 118 ausgebildet sein, sowie als Bahnen einer Kombination der genannten Metalle und/oder weiterer Metalle, vorzugsweise im Schichtaufbau. Wie in der Darstellung gemäß Figur 5A erkennbar, sind diese Heizwiderstände 156 überwiegend im Bereich der Vertiefung 130 im Chipträger 118 angeordnet. Dieser Chipträger 118 ist in diesem Ausführungsbeispiel an ein Sensorgehäuse 158, welches beispielsweise als Blechbiegeteil ausgeformt ist, durch ein Spritzgussverfahren angeformt. Dabei werden Zuleitungen 160 zu den Heizwiderständen 156 aus dem Bereich der Vertiefung 130 herausgeführt, hin zu zwei Kontaktstellen 162. In der Darstellung gemäß Figur 5A ist der Sensorchip 122 nicht in die Vertiefung 130 eingesetzt, so dass die Heizwiderstände 156 in dieser perspektivischen Darstellung erkennbar sind.

In der Darstellung gemäß Figur 5B, welche eine perspektivische Ansicht des Sensorgehäuses 158 mit angeformtem Chipträger 118 von unten zeigt, ist dargestellt, wie ein Schaltungsträger 164 auf das Sensorgehäuse 158 aufgebracht wird. Dieser Schaltungsträger 164 kann beispielsweise als Keramikplatine ausgebildet sein und trägt die wesentlichen Bauelemente, welche zur Ansteuerung des Heißfilmluftmassenmessers 110 erforderlich sind. Bei dem Schaltungsträger 164 kann es sich auch um einen Hybridschaltungsträger oder eine Leiterplatte handeln. Diese Bauelemente sind in der Darstellung gemäß Figur 5B und 5C nicht dargestellt. Typischerweise wird der Schaltungsträger 164 in bestücktem Zustand auf das Sensorgehäuse 158 aufgesetzt. Auf seiner Unterseite weist der Schaltungsträger 164 zwei Kontaktstellen 166 auf, welche mittels zweier Durchkontaktierungen 168 mit zwei auf der Oberseite des Schaltungsträgers 164 angeordneten Leiterbahnen 170 als Zuleitung für die Heizwiderstände 156 verbunden sind. Wie in den Darstellungen gemäß Figur 5B und Figur 5C gezeigt, wird der Schaltungsträger 164 derart auf das Sensorgehäuse 158 aufgesetzt, dass die Kontaktstellen 166 des Schaltungsträgers 164 mit den Kontaktstellen 162 auf dem Chipträger 168 überlappen. Ein elektrischer Kontakt zwischen diesen Kontaktstellen 162 und 166 kann beispielsweise durch Leitkleber hergestellt werden. Auf diese Weise lassen sich die Zuleitungen 160 der Heizwiderstände 156 über die Zuleitungen 170 auf dem Schaltungsträger 164 bestromen und somit die Heizwiderstände 156 aufheizen. In Figur 5C, welche eine perspektivische Darstellung von oben zeigt, ist dargestellt, wie schließlich der Sensorchip 122 in die Vertiefung 130 des Chipträgers 118 eingesetzt ist. Eine Kontaktierung der erforderlichen elektrischen Kontakte auf dem Sensorchip 122 mit entsprechenden Anschlüssen auf dem Schaltungsträger 164 kann beispielsweise mittels Drahtbonden erfolgen. Zusätzlich oder alternativ können auch ein oder mehrere Bauelemente, insbesondere Bauelemente zur Ansteuerung der Heizwiderstände 156, ganz oder teilweise als ASIC-Bauelemente (application specific integrated circuit, anwendungsspezifischer integrierter Schaltkreis) ausgestaltet sein.

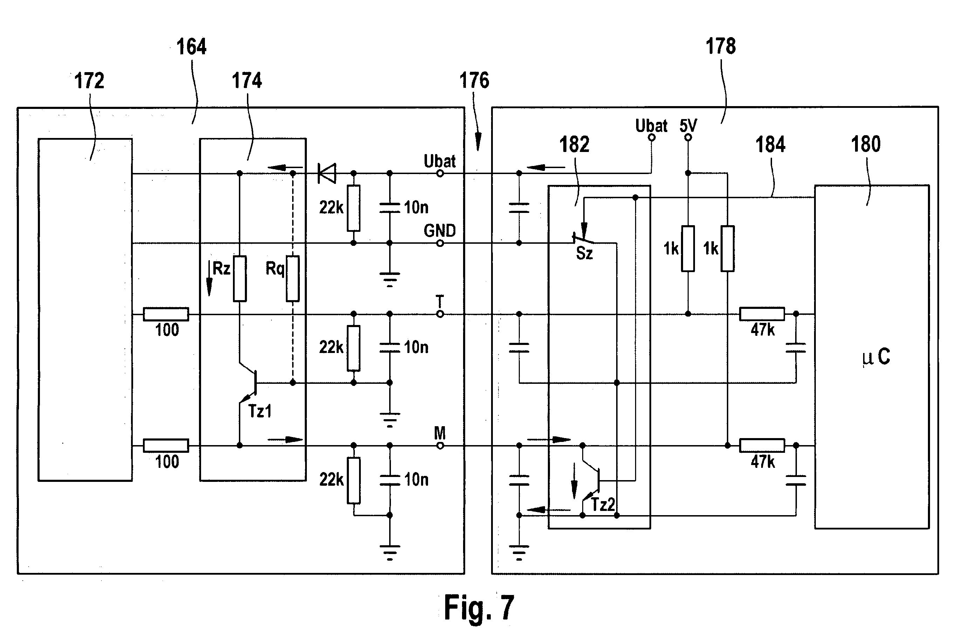

In den Figuren 6 und 7 ist schließlich ein Ausführungsbeispiel einer elektronischen Schaltung dargestellt, mittels dessen ein Heißfilmluftmassenmesser 110 mit einem zusätzlichen Heizelement 150 angesteuert werden kann, wobei das zusätzliche Heizelement 150 entsprechend ein- und ausgeschaltet werden kann. Dabei kann, wie oben beschrieben, das zusätzliche Heizelement 150 auch während einer Nachheizperiode nach Abschalten der Verbrennungskraftmaschine weiter betrieben werden. Dabei stellt Figur 6 ein einfaches Blockschaltbild dar, welches aufzeigt, wie der Sensorchip 122 mit einem auf dem Schaltungsträger 164 angeordneten Chipsteuermodul 172 verbunden ist. Gleichzeitig wird dargestellt, wie mittels eines Schaltmoduls 174, welches im Wesentlichen in zwei der Zuleitungen 176 zum Chipsteuermodul 172 (beispielsweise Ubat und GND) geschaltet ist, das zusätzliche Heizelement 150 gesteuert bzw. geschaltet werden kann.

In Figur 7 ist ein detaillierteres Schaltbild einer Ausführungsform der Schaltung gemäß Figur 6 dargestellt. Zusätzlich zu den in Figur 6 dargestellten Modulen 172 und 174 weist die Anordnung gemäß Figur 7 Bauelemente eines Motorsteuerungsgeräts 178 mit einem Microcontroller 180 auf. Beispielsweise kann hierbei ein EDC16 oder EDC17 eingesetzt werden. Alternativ oder zusätzlich kann die in Figur 7 dargestellte Schaltung ganz oder teilweise als ASIC ausgestaltet sein.

Das auf dem Schaltungsträger 164 angeordnete Chipsteuermodul 172 kann beispielsweise analog zu einer beispielsweise in DE 100 65 038 A1 offenbarten Steuerschaltung für einen Heißfilmluftmassenmesser 110 ausgestaltet sein. Zusätzlich ist in dem Ausführungsbeispiel gemäß Figur 7 das Schaltmodul 174 auf dem Schaltungsträger 164 angeordnet. Dieses Schaltmodul 174 weist im Wesentlichen einen Transistor Tz1 und einen Heizwiderstand Rz auf, wobei dieser Heizwiderstand Rz den Heizwiderstand 156 des zusätzlichen Heizelements 150 symbolisiert, welches in Wirklichkeit nicht auf dem Schaltungsträger 164 angeordnet ist. Der Widerstand Rq ist ein optionaler Bestandteil des Schaltmoduls 174.

Im Motorsteuerungsgerät 178 ist im Vergleich zu herkömmlichen Motorsteuerungsgeräten zusätzlich die Schalteranordnung 182 eingebracht. Diese Schalteranordnung 182 weist im Wesentlichen einen durch den Microcontroller 180 schaltbaren Schalter Sz auf, sowie einen zweiten Transistor Tz2. Für die Transistoren Tz1 und Tz2 können beispielsweise 200 mA-Transistoren, z. B. vom Typ BC846B, welcher äußerst kostengünstig ist, eingesetzt werden.

Die dargestellte Schaltung gemäß Figur 7 kann folgendermaßen genutzt werden, um das zusätzliche Heizelement 150 einzuschalten, wenn gleichzeitig die übrige Funktionalität des Heißfilmluftmassenmessers 110 abgeschaltet wird. In einem Normalbetrieb wird der Schalter Sz über eine Microcontroller-Steuerleitung 184 geschlossen gehalten. Dadurch sperrt der Transistor Tz2, wodurch auch der Transistor Tz1 sperrt, so dass kein Heizstrom vom Anschluss Ubat nach Masse über den Heizwiderstand Rz fließen kann. Zum Abschalten des Heißfilmluftmassenmessers 110, beispielsweise beim Abschalten der Verbrennungskraftmaschine, wird über den Microcontroller 180 der Schalter Sz geöffnet. Dadurch wird das Chipsteuermodul 172 abgeschaltet. Gleichzeitig wird bei diesem Öffnen des Schalters Sz über die Microcontroller-Steuerleitung 184 auch der Transistor Tz2 geschaltet, so dass ein Strom über den Heizwiderstand Rz fließen kann und das zusätzliche Heizelement 150 aufgeheizt wird.

### Bezugszeichenliste

- 110: Heißfilmluftmassenmesser
- 112: Gehäuse
- 114: Elektronikbereich
- 116: Kanalbereich
- 118: Chipträger
- 120: Bypasskanal
- 122: Sensorchip
- 124: Membran
- 126: Heizelement
- 128: Temperatursensoren
- 130: Vertiefung
- 132: Strömungsmedium
- 134: dem Strömungsmedium zugewandte Oberfläche
- 136: Sensoroberfläche
- 138: Sensorrahmen
- 140: Öffnung
- 142: aktiver Bereich
- 144: Ölablagerungsbereich
- 146: Thermogradientenwirbel
- 148: Heizzone
- 150: zusätzliches Heizelement
- 152: Rückseite des Chipträgers
- 154: Aussparung
- 156: Heizwiderstände
- 158: Sensorgehäuse
- 160: Zuleitungen
- 162: Kontaktstellen
- 164: Schaltungsträger
- 166: Kontaktstellen
- 168: Durchkontaktierungen
- 170: Zuleitungen
- 172: Chipsteuermodul
- 174: Schaltmodul
- 176: Zuleitungen
- 178: Motorsteuerungsgerät
- 180: Microcontroller
- 182: Schalteranordnung
- 184: Microcontroller-Steuerleitung

## Patentansprüche

1. Heißfilmluftmassenmesser (110), insbesondere zur Messung von Luftmassenströmen im Ansaugtrakt einer Verbrennungskraftmaschine, mit
a) einem Sensorchip (122) mit einem Sensorrahmen (138) und einer Sensormembran (124) mit mindestens einem Heizelement (126) und mindestens zwei Temperatursensoren (128);
b) einem Chipträger (118) zur Halterung des Sensorchips (122); und
**dadurch gekennzeichnet, daß** der Heißfilmluftmassenmesser (110)
c) mindestens ein zusätzliches Heizelement (150) aufweist wobei das mindestens eine zusätzliche Heizelement (150) derart in den Chipträger (118) eingebracht oder auf dem Chipträger aufgebracht ist, dass mittels des mindestens einen zusätzlichen Heizelements (150) der Sensorchip (122) aufheizbar ist.

2. Heißfilmluftmassenmesser (110) gemäß dem vorhergehenden Anspruch, **dadurch gekennzeichnet, dass** der Chipträger (118) eine Vertiefung (130) aufweist, wobei der Sensorchip (122) dergestalt in die Vertiefung (130) eingebracht ist, dass der Sensorchip (122) mit dem Chipträger (118) im Wesentlichen bündig abschließt.

3. Heißfilmluftmassemnesser (110) gemäß einem der beiden vorhergehenden Ansprüche, **dadurch gekennzeichnet, dass** das mindestens eine zusätzliche Heizelement (150) mindestens einen auf den Chipträger (118) aufgebrachten Heizwiderstand (156) aufweist, wobei der mindestens eine Heizwiderstand (156) insbesondere mindestens eine auf den Chipträger (118) aufgebrachte Widerstandsbahn (156) aufweist.

4. Heißfilmlulftmassenmesser (110) gemäß dem vorhergehenden Anspruch, **dadurch gekennzeichnet, dass** der Chipträger (118) als spritzgegossenes Leiterplattenbauteil (MID-Bauteil), insbesondere als laserstrukturierbares Kunststoffbauteil und/oder als Mehrkomponenten-Spritzgussbauteil und/oder als Heißprägebauteil, ausgestaltet ist.

5. Heißfilmluftmassenmesser (110) gemäß einem der beiden vorhergehenden Ansprüche, **dadurch gekennzeichnet, dass** der Chipträger (118) mindestens eine Vorderseite (134) und eine Rückseite (152) aufweist, wobei der Sensorchip (122) in die Vorderseite (134) des Chipträgers (118) eingelassen ist und wobei das mindestens eine zusätzliche Heizelement (150) mindestens ein in die Rückseite (152) des Chipträgers (118) eingelassenes zusätzliches Heizelement (150) aufweist.

6. Heißfilmluftmassemnesser (110) gemäß einem der vorhergehenden Ansprüche, **dadurch gekennzeichnet, dass** mittels des mindestens einen zusätzlichen Heizelements (150) der Sensorchip (122) im Wesentlichen gleichförmig beheizbar ist.

7. Verfahren zur Luftmassenmessung im Ansaugtrakt einer Verbrennungskraftmaschine mittels eines Heißfilmluftmassenmessers (110) gemäß einem der vorhergehenden Ansprüche, **dadurch gekennzeichnet, dass** der Sensorchip (122) im Betrieb der Verbrennungskraftmaschine im Wesentlichen kontinuierlich mittels des mindestens einen zusätzlichen Heizelements (150) beheizt wird.

8. Verfahren gemäß dem vorhergehenden Anspruch, **dadurch gekennzeichnet, dass** nach einem Abschalten der Verbrennungskraftmaschine das mindestens eine zusätzliche Heizelement (150) für eine vorgegebene Nachheizperiode weiter betrieben wird.

9. Verfahren gemäß dem vorhergehenden Anspruch, **dadurch gekennzeichnet, dass** die Nachheizperiode eine zeitliche Dauer von 10 Sekunden bis 5 Minuten aufweist.

10. Verfahren gemäß einem der beiden vorhergehenden Ansprüche, **dadurch gekennzeichnet, dass** das mindestens eine zusätzliche Heizelement (150) gleichzeitig mit oder nach dem Abschalten der Verbrennungskraftmaschine aufgeheizt wird.

11. Verfahren zum Herstellen eines Heißfilmluftmassenmessers (110) gemäß einem der Ansprüche 1 - 6, insbesondere zur Messung von Luftmassenströmen im Ansaugtrakt einer Verbrennungskraftmaschine, **gekennzeichnet durch** folgende Schritte:
a) ein Chipträger (118) wird an ein Sensorgehäuse (158) angeformt, vorzugsweise mittels eines Spritzgussverfahrens;
b) mindestens ein zusätzlicher Heizwiderstand (156) wird auf den Chipträger (118) aufmetallisiert, vorzugsweise mittels eines der folgenden Verfahren: Laserstrukturierung, Heißprägen, Mehrkomponentenspritzguss;
c) ein Sensorchip (122) mit einem Sensorrahmen (138) und einer Sensormembran (124) mit mindestens einem Heizelement (126) und mindestens zwei Temperatursensoren (128) wird auf den mindestens einen zusätzlichen Heizwiderstand (156) aufgebracht; und
d) mindestens ein Schaltungsträger (164) wird auf das Sensorgehäuse (158) aufgebracht, wobei mindestens ein elektrischer Kontakt (166) des mindestens einen Schaltungsträgers (164) mit mindestens einem elektrischen Kontakt (162) des mindestens einen zusätzlichen Heizwiderstands (156) verbunden wird.

## Claims

1. Hot film air mass sensor (110), in particular for measuring air mass flows in the intake tract of an internal combustion engine, having
a) a sensor chip (122) with a sensor frame (138) and a sensor diaphragm (124) with at least one heating element (126) and at least two temperature sensors (128);
b) a chip carrier (118) for mounting the sensor chip (122); and
**characterized in that** the hot film air mass sensor (110)
c) has at least one additional heating element (150), wherein the at least one additional heating element (150) is inserted into the chip carrier (118) or is applied to the chip carrier in such a way that the sensor chip (122) can be heated by means of the at least one additional heating element (150).

2. Hot film air mass sensor (110) according to the preceding claim, **characterized in that** the chip carrier (118) has a depression (130), wherein the sensor chip (122) is inserted into the depression (130) in such a way that the sensor chip (122) terminates substantially flush with the chip carrier (118).

3. Hot film air mass sensor (110) according to one of the two preceding claims, **characterized in that** the at least one additional heating element (150) has at least one heating resistor (156) applied to the chip carrier (118), wherein the at least one heating resistor (156) has in particular at least one resistance track (156) applied to the chip carrier (118).

4. Hot film air mass sensor (110) according to the preceding claim, **characterized in that** the chip carrier (118) is formed as an injection moulded printed circuit board component (MID component), in particular as a laser-structurable plastic component and/or as a multi-component injection moulded component and/or as a hot-stamped component.

5. Hot film air mass sensor (110) according to one of the two preceding claims, **characterized in that** the chip carrier (118) has at least a front side (134) and a rear side (152), wherein the sensor chip (122) is recessed into the front side (134) of the chip carrier (118) and wherein the at least one additional heating element (150) has at least one additional heating element (150) recessed into the rear side (152) of the chip carrier (118).

6. Hot film air mass sensor (110) according to one of the preceding claims, **characterized in that** the sensor chip (122) can be substantially uniformly heated by means of the at least one additional heating element (150).

7. Method for air mass measurement in the intake tract of an internal combustion engine by means of a hot film air mass sensor (110) according to one of the preceding claims, **characterized in that** the sensor chip (122) is heated substantially continuously by means of the at least one additional heating element (150) during operation of the internal combustion engine.

8. Method according to the preceding claim, **characterized in that**, after a shutdown of the internal combustion engine, the operation of the at least one additional heating element (150) continues for a predefined post-heating period.

9. Method according to the preceding claim, **characterized in that** the post-heating period has a time duration of 10 seconds to 5 minutes.

10. Method according to one of the two preceding claims, **characterized in that** the at least one additional heating element (150) is heated simultaneously with or after the shutdown of the internal combustion engine.

11. Method for producing a hot film air mass sensor (110) according to one of Claims 1 to 6, in particular for measuring air mass flows in the intake tract of an internal combustion engine, **characterized by** the following steps:
a) a chip carrier (118) is integrally formed on a sensor housing (158), preferably by means of an injection moulding process;
b) at least one additional heating resistor (156) is metallized on the chip carrier (118), preferably by means of one of the following processes: laser structuring, hot stamping, multi-component injection moulding;
c) a sensor chip (122) with a sensor frame (138) and a sensor diaphragm (124) with at least one heating element (126) and at least two temperature sensors (128) is applied to the at least one additional heating resistor (156); and
d) at least one circuit carrier (164) is applied to the sensor housing (158), wherein at least one electrical contact (166) of the at least one circuit carrier (164) is connected to at least one electrical contact (162) of the at least one additional heating resistor (156).

## Revendications

1. Débitmètre d'air massique à film chaud (110), en particulier pour la mesure de flux massiques d'air dans le conduit d'admission d'un moteur à combustion interne, comprenant :
a) une puce de capteur (122) avec un cadre de capteur (138) et une membrane de capteur (124) avec au moins un élément chauffant (126) et au moins deux capteurs de température (128) ;
b) un support de puce (118) pour retenir la puce de capteur (122) ; et
**caractérisé en ce que** le débitmètre d'air massique à film chaud (110) présente
c) au moins un élément chauffant supplémentaire (150), l'au moins un élément chauffant supplémentaire (150) étant introduit dans le support de puce (118) ou étant appliqué sur le support de puce de telle sorte que la puce de capteur (122) puisse être chauffée au moyen de l'au moins un élément chauffant supplémentaire (150).

2. Débitmètre d'air massique à film chaud (110) selon la revendication précédente, **caractérisé en ce que** le support de puce (118) présente un renfoncement (130), la puce de capteur (122) étant introduite dans le renfoncement (130) de telle sorte que la puce de capteur (122) se termine essentiellement en affleurement avec le support de puce (118).

3. Débitmètre d'air massique à film chaud (110) selon l'une quelconque des deux revendications précédentes, **caractérisé en ce que** l'au moins un élément chauffant supplémentaire (150) présente au moins une résistance chauffante (156) appliquée sur le support de puce (118), l'au moins une résistance chauffante (156) présentant notamment au moins une piste résistante (156) appliquée sur le support de puce (118).

4. Débitmètre d'air massique à film chaud (110) selon la revendication précédente, **caractérisé en ce que** le support de puce (118) est configuré sous forme de composant de carte à circuits imprimés moulé par injection (composant MID), notamment sous forme de composant en plastique structurable par laser et/ou sous forme de composant moulé par injection à plusieurs composants et/ou sous forme de composant gaufré à chaud.

5. Débitmètre d'air massique à film chaud (110) selon l'une des deux revendications précédentes, **caractérisé en ce que** le support de puce (118) présente au moins un côté avant (134) et un côté arrière (152), la puce de capteur (122) étant intégrée dans le côté avant (134) du support de puce (118) et l'au moins un élément chauffant supplémentaire (150) présentant au moins un élément chauffant supplémentaire (150) incorporé dans le côté arrière (152) du support de puce (118).

6. Débitmètre d'air massique à film chaud (110) selon l'une quelconque des revendications précédentes, **caractérisé en ce qu'**au moyen de l'au moins un élément chauffant supplémentaire (150), la puce de capteur (122) peut être chauffée essentiellement uniformément.

7. Procédé de mesure d'air massique dans le conduit d'admission d'un moteur à combustion interne au moyen d'un débitmètre d'air massique à film chaud (110) selon l'une quelconque des revendications précédentes, **caractérisé en ce que** la puce de capteur (122) pendant le fonctionnement du moteur à combustion interne est chauffée de manière essentiellement continue au moyen de l'au moins un élément chauffant supplémentaire (150).

8. Procédé selon la revendication précédente, **caractérisé en ce qu'**après une coupure du moteur à combustion interne, l'au moins un élément chauffant supplémentaire (150) reste encore activé pendant une période de post-chauffage prédéfinie.

9. Procédé selon la revendication précédente, **caractérisé en ce que** la période de post-chauffage présente une durée de 10 secondes à 5 minutes.

10. Procédé selon l'une des deux revendications précédentes, **caractérisé en ce que** l'au moins un élément chauffant supplémentaire (150) est chauffé simultanément avec, ou après, la coupure du moteur à combustion interne.

11. Procédé de fabrication d'un débitmètre d'air massique à film chaud (110) selon l'une quelconque des revendications 1 à 6, en particulier pour la mesure de flux d'air massiques dans le conduit d'admission d'un moteur à combustion interne, **caractérisé par** les étapes suivantes :
a) un support de puce (118) est façonné sur un boîtier de capteur (158), de préférence au moyen d'un procédé de moulage par injection ;
b) au moins une résistance chauffante supplémentaire (156) est électrodéposée sur le support de puce (118), de préférence au moyen de l'un des procédés suivants : structuration laser, gaufrage à chaud, moulage par injection à plusieurs composants ;
c) une puce de capteur (122) avec un cadre de capteur (138) et une membrane de capteur (124) comprenant au moins un élément chauffant (126) et au moins deux capteurs de température (128) est appliquée sur l'au moins une résistance chauffante supplémentaire (156) ; et
d) au moins un support de montage (164) est appliqué sur le boîtier de capteur (158), au moins un contact électrique (166) de l'au moins un support de montage (164) étant connecté à au moins un contact électrique (162) de l'au moins une résistance chauffante supplémentaire (156).
